# EUROPEAN PATENT APPLICATION

(11) **EP 1 569 440 A2**
(43) Date of publication of application: **31.08.2005**
(21) Application number: 04258180.1
(22) Date of filing: 30.12.2004
(51) Int. Cl.: H04N 5/232, H04N 5/33

(54) **Night vision system with video screen**

(30) Priority: 27.02.2004 US 789815
(71) Applicant: Meade Instruments Corporation, Irvine, CA 92618 (US)
(72) Inventor: Baun, Kenneth W., Trabuco Canyon CA 92679 (US)
(74) Representative: Meldrum, David James

(57) **Abstract**

An apparatus and method for displaying an image of a subject in low light conditions. The image is displayed on a video screen. In an embodiment, a video screen is disposed within a housing of a night vision device. A user can also selectively filter light emitted by the display screen to change its color or to reduce the amount of light received by the user's eye.

## Description

### Background of the Invention

### Field of the Invention

The present invention relates to a night vision system and method for displaying an enhanced image.

### Description of the Related Art

Night vision devices are used to view subjects in low lighting conditions. Night vision devices typically have a lens, an image intensifier tube, and an eyepiece lens arranged coaxially such that a user can view an intensified image of an object. Thus, by looking into the eyepiece at an output surface of the image intensifier tube, the user can view bright images of otherwise dim scenes. However, night vision systems using image intensifier tubes are typically large, heavy and inefficient.

Other night vision systems use image-intensified video cameras to amplify light in low lighting conditions. Typically, such systems are combined with, for example, positioning headgear and provide an amplified video image of a subject to an external display screen often mounted on the headgear. Alternatively, night vision systems are known to transmit amplified video images to remotely located video screens. For example, a night vision system can include a photo intensifier tube or video camera mounted to a vehicle and a display screen, such as a heads-up display, remotely located in the passenger compartment of the vehicle.

External display screens are typically large and require excessive amounts of power. External display screens also emit light that illuminates the screen's surroundings. This can be disadvantageous for several reasons including illumination from the screen affecting both eyes of a user. It is often desirable, for example, to keep the visual acuity of at least one eye accustomed to the natural light level of the surroundings. Losing such visual acuity by exposing the eyes to higher light intensities is commonly referred to as "night blindness" because the ability to distinguish objects becomes impaired. After experiencing night blindness, it may take several minutes or even hours to become re-accustomed to the surrounding light level.

Further, when observing subjects in the dark, it is often desirable to remain unnoticed by others. For example, a stealth observer can study nature without disturbing wild animals. Similarly, security or military tasks are often more safely performed under the cover of darkness. The light emitted by external displays can alert others to the presence, location and identity of an observer.

As mentioned in the foregoing, night vision systems can be mounted on headgear and worn by the user. In such systems, monocular or binocular image intensifier tubes are held in place in front of a user's eyes by the headgear. Alternatively, the headgear may include a visor for displaying a projected image or an external liquid crystal display (LCD) screen positioned in front of the user's eyes. Such headgear systems are cumbersome, heavy, and can be a distraction to the user. To briefly view an intensified image of the surroundings, a user must don the entire headgear. Further, it can be difficult and inefficient to repeatedly move the display in and out of the user's field of view as desired or as required by the user's tasks or lighting conditions.

### Summary of the Invention

Thus, it would be advantageous to develop a technique and system for displaying an amplified image of a subject using a small, low cost device. It would also be advantageous to develop a system and technique to reduce the amount of visible light emitted from a night vision device that uses digital imaging technology.

The present invention provides a night vision system and method for observing a subject in low lighting conditions. A night vision device according to one aspect of the invention includes an objective lens configured to focus light onto a digital imaging device, such as a digital video camera. The digital imaging device is configured to generate an electronic signal corresponding to an intensity enhanced image of the light received. The intensity enhanced image is then displayed on an internal display screen. A user can view the intensity enhanced image on the display screen by looking through an eyepiece attached to the night vision device. The night vision device can also include a light source, such as an infrared light source, to illuminate a subject to be viewed through the night vision device. According to an aspect of the invention, a user can selectively filter the light emitted by the display screen to change its color or to reduce the amount of light received by the user's eye.

According to the foregoing, an embodiment includes a handheld night vision device for viewing a subject in low light conditions, wherein the subject is not viewed through an image intensifier tube, and wherein a reduced portion of a user's face proximate an eye is illuminated. The night vision device includes a housing having optics to collect light into the housing, an eyepiece, and an imager positioned to be illuminated by the light. The imager is configured to generate an electrical signal corresponding to an intensity enhanced image of the light. The night vision device also includes a digital display attached to the housing. The digital display is configured to display the intensity enhanced image. The digital display is viewable through the eyepiece.

In an embodiment, a method is provided for providing night vision to a user. The method includes receiving an image through first optics into a housing, digitally enhancing the intensity of the image, electronically displaying the intensity enhanced image on a screen disposed within the housing, and providing a view of the screen through second optics attached to the housing.

In an embodiment, an apparatus is provided for viewing subjects in reduced light. The apparatus includes an enclosure, a sensing means attached directly to the enclosure for receiving light and for generating a signal proportional to an intensity enhanced image of the light, a means for receiving the signal and for displaying the intensity enhanced image within the enclosure, and a means for viewing the intensity enhanced image within the enclosure.

In an embodiment, a night vision scope includes a lens assembly configured to collect light, a sensor configured to amplify the light, and an internal video display module configured to display a video signal corresponding to an image of the amplified light.

Other features and advantages of the present invention will become apparent to those of ordinary skill in the art through consideration of the ensuing description, the accompanying drawings, and the appended claims.

### Brief Description of the Drawings

Examples of a system and method which embodies various features of the invention will now be described with reference to the following drawings:
FIG. 1 is a perspective view of night vision scope;
FIG. 2A is a front view of a night vision device;
FIG. 2B is a rear view of the night vision device of FIG. 2A;
FIG. 2C is a top view of the night vision device of FIG. 2A with the top cover removed to illustrate a portion of the internal circuitry;
FIG. 2D is a side view of the night vision device of FIG. 2A illustrating a block diagram of various elements according to an embodiment of the invention;
FIG. 3 is an illustration of a user viewing a subject through a night vision apparatus according to an embodiment of the invention;
FIGS. 4A - 4C are side views of night vision systems having attached display modules; and
FIG. 5 is a block diagram illustrating a night vision system.

### Description of Specific Embodiments

The present invention involves a night vision system having an attached video display that is viewable through an eyepiece. In the present example, the night vision system includes an enclosure and a lens for directing light into the enclosure. The night vision system also includes a sensor configured to receive the light and to produce a signal proportional to an intensified image of a subject being observed. In the present example, the night vision device includes a light source to illuminate the subject being observed. In some examples, the light source illuminates the subject with light that is substantially imperceptible to the human eye while being detectable by the sensor. In one example, the light source emits infrared light.

In the present example, the video display is disposed within the enclosure. Alternatively, the video display can be attached to the outer surface of the enclosure or can be partially inserted into the enclosure. To reduce detection by third parties and to reduce night blindness, the light emitted by the video display screen can be directed through the eyepiece. In the present example, the eyepiece is sized so as to substantially illuminate only a user's face proximate a single eye during use. In one example, the eyepiece is configured to substantially cover a user's eye during use.

According to some examples of the night vision system, interchangeable filters can be inserted between the eyepiece and the video display. A user may select a filter based on the application and desired image quality. Inserting a filter can change the color of the display to produce a desired visual effect. For example, the color of the display can be selected to preserve night vision acuity or to enhance details of a subject being observed. The filter can also be selected based upon controlling the amount of light emitted from the night vision system or to match the color perception of the eye of the user.

According to some examples of the night vision system, the enclosure is configured as a scope that can be operated and carried with one hand. The enclosure can include user controls for adjusting the image characteristics of the video display or the intensity of the light source. In one example, the enclosure can be attached to a siting instrument or other device.

In the following description, reference is made to the accompanying drawings, which form a part hereof, and which show, by way of example only, specific embodiments or processes in which the invention may be practiced. Where possible, the same reference numbers are used throughout the drawings to refer to the same or like components. In some instances, numerous specific details are set forth in order to provide a thorough understanding of the present invention. The present invention, however, may be practiced without the specific details or with certain alternative equivalent components and methods to those described herein. In other instances, well-known components and methods have not been described in detail so as not to unnecessarily obscure aspects of the present invention.

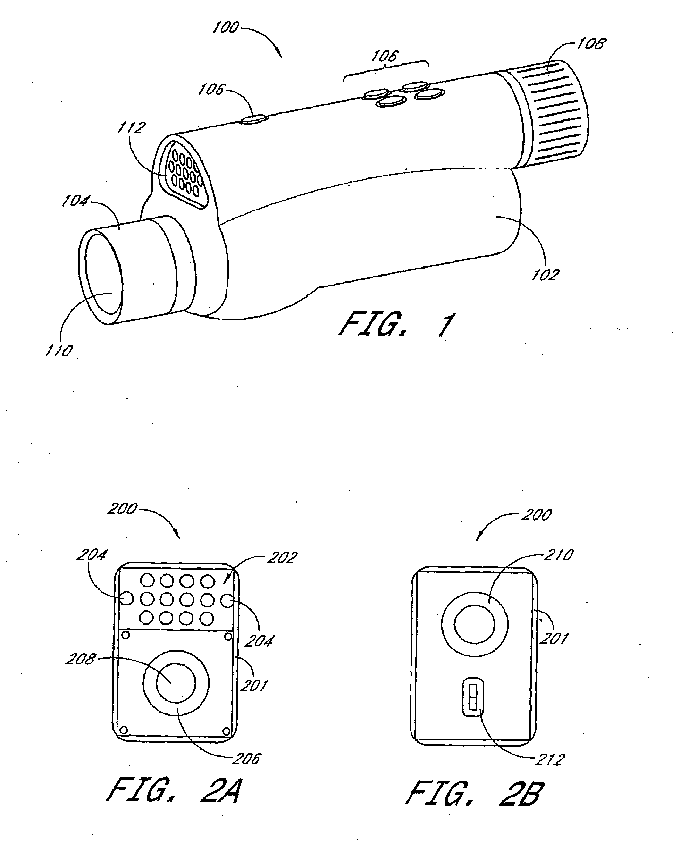

FIG. 1 is a perspective view of an example of a night vision scope 100. The night vision scope 100 includes a housing 102, a lens assembly 104, user control buttons 106, and an eyepiece 108. The night vision scope 100 is portable and is configured to be held in a user's hand while observing a subject at night or in low light conditions. For example, the night vision scope 100 may be used in hunting, observing nature, camping, hiking, security, military activities, police applications, or the like.

Although described with reference to a handheld monocular night vision scope 100, an artisan will recognize from the disclosure herein that the night vision scope 100 may be a binocular device, camera, gun, other optical device or the like. The night vision scope 100 may be mounted on a movable or fixed surface or stand such as a camera tripod or the like.

The lens assembly 104 of the present example includes a lens 110 configured to collect light into the night vision scope 100. The lens assembly 104 is configured to provide an adjustable focus of an image into the night vision scope 100. The focus may be adjusted using the control buttons 106. Alternatively, the lens assembly may be focused automatically.

The night vision scope 100 also includes illumination optics 112 configured to illuminate a subject being viewed. In the present example, the illumination optics 112 are configured to emit infrared light towards the subject. In some examples, the user control buttons 106 are configured to control the intensity or brightness of the emitted light.

In the present example, the night vision scope 100 does not use an image intensifier tube to amplify the light received through the lens assembly 104. In the present example, the night vision scope 100 uses digital imaging technology, which provides a crisp image with clear contrast through a detailed video display (not shown). The video display can be viewed by the user through the eyepiece 108. The user control buttons 106 are configured to refine the details of the displayed image according to lighting conditions and the subject being observed.

Although the foregoing discloses that the night vision scope 100 of the present example does not use an image intensifier tube, other examples may perform digital signal processing on the output of an image intensifier tube (not shown) and displays an image corresponding to light intensified by the image intensifier tube on a video display screen.

FIGS. 2A - 2D illustrate several views of an example of a night vision device 200. FIG. 2A illustrates a front view of the night vision device 200. The night vision device 200 comprises an enclosure 201 and a light source 202 including a plurality of light emitting diodes (LEDs) 204 (14 shown). In the present example, the LEDs 204 comprise high-powered, infrared LEDs. The LEDs 204 are sized, configured, and positioned in an array to illuminate a target with focused light. In the present example, the dispersion of the light is adjustable, for example, by adjusting the focus of a dispersive lens placed in front of the light source 202. Thus, the light emitted by the light source 202 can be focused narrowly onto an object or spread over a wider area.

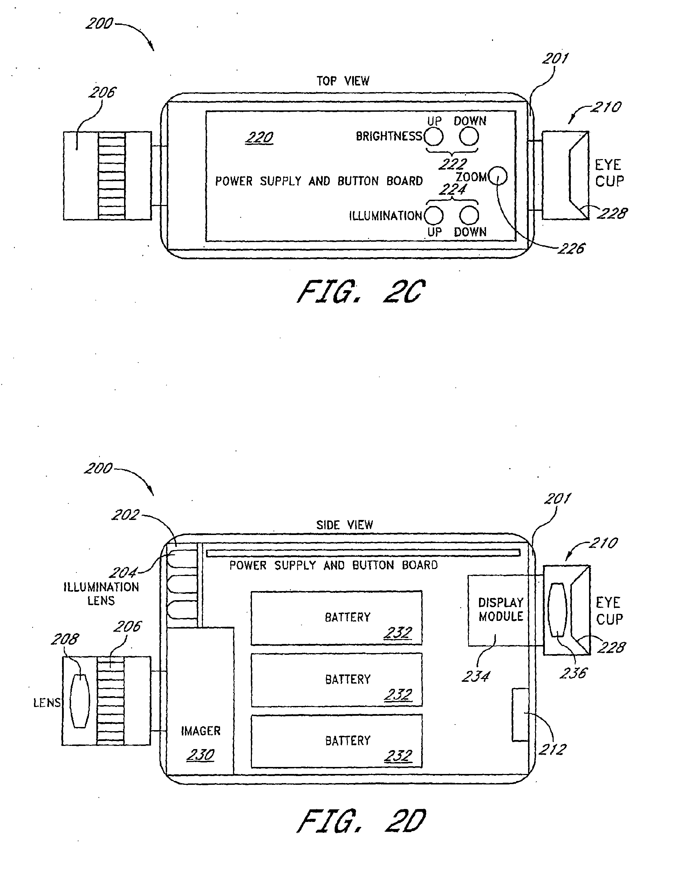

The night vision device 200 also includes a lens assembly 206 having a lens 208 for collecting light into the enclosure 201 of the night vision device 200. The lens assembly 206 is configured to automatically or manually focus the light onto an imager 230 (see FIG. 2D) disposed within the enclosure 201.

FIG. 2B illustrates a rear view of the night vision device 200 of FIG. 2A. The night vision device 200 includes user optics 210 extending out of the enclosure 201. The user optics 210 allow a user to view a screen (not shown) disposed within the night vision device using a single eye. The night vision device 200 also includes a power switch 212 configured to selectively turn the night vision device 200 on and off.

FIG. 2C illustrates a top view of the night vision device 200 of FIG. 2A having the top cover removed to show a power supply and button circuit board 220. The power supply and button circuit board 220 includes user controls 222, 224, 226. A first set of user controls 222 is configured to increase (UP) and decrease (DOWN) the brightness or intensity of light emitted from the screen (not shown) observable through the user optics 210. A second set of user controls 224 is configured to adjust the intensity of the illumination provided by the array of LEDs 204 (shown in FIGS 2A and 2D). The circuit board 220 also includes a user control 226 for controlling the zoom or focus of the lens assembly 206 such that an object's apparent distance from the user changes.

Alternatively, the functions adjusted by the user controls 222, 224, 226 in FIG. 2C can be adjusted, for example, automatically, automatically with a manual override selectively controlled by the user, or a combination of the foregoing.

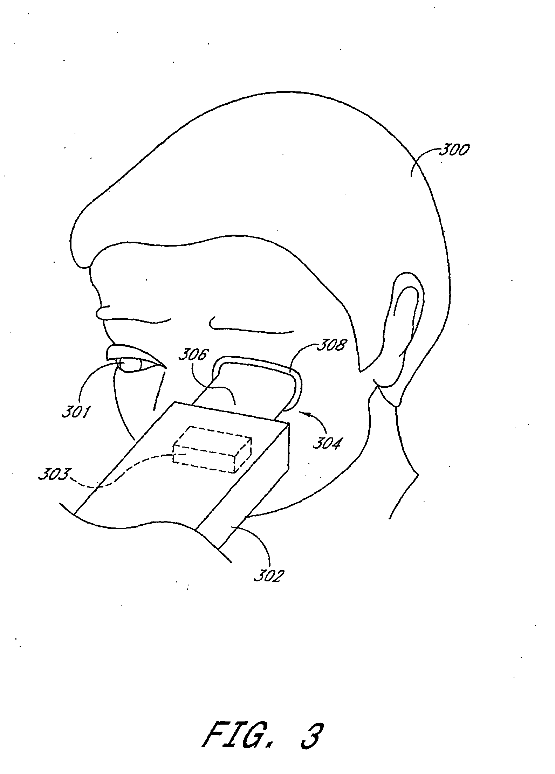

In the present example, the user optics 210 include an eye cup 228 configured to be positioned proximate a user's eye so as to reduce the amount of light from the internal screen illuminating the user's face. For example, FIG. 3 is an illustration of a user 300 viewing a subject (not shown) through a night vision apparatus 302 arranged according to the present example. The user 300 is shown viewing the subject with an uncovered eye 301 and with a covered eye (not shown) through the night vision apparatus 302. The night vision apparatus 302 includes a digital display 303 disposed within the night vision apparatus 302. The night vision apparatus 302 also includes an eyepiece 304 having an optical passage 306 attached to the night vision apparatus 302 and a flexible eye cup 308 attached to the optical passage 306.

The light passage 306 allows light from the digital display 303 to illuminate the user's 300 covered eye when viewing an image of the subject. The flexible eye cup 308 is configured to be placed against the user's 300 face when viewing the image through the eyepiece 304. Thus, the flexible eyepiece 308 reduces the amount of light that can illuminate the user's 300 face proximate the covered eye. This allows the user 300 to observe the subject without the light from the digital display 303 being noticed by others. Further, since the digital display 303 is only observed through the eyepiece by the covered eye, the uncovered eye 301 can maintain its visual acuity to the surrounding light conditions.

FIG. 2D is a side view of the night vision device 200 of FIG. 2A illustrating a block diagram of various elements. As shown in FIG. 2D, the night vision device 200 of the present example includes an imager 230 optically coupled to the lens assembly 206, batteries 232 (three shown), and a display module 234 disposed within the enclosure 201. The imager 230 is configured to receive light through the lens 208 and to generate an electrical signal related to an intensity enhanced image. The display module 234 is configured to receive the electrical signal and to display the intensity enhanced image. The intensity enhanced image displayed by the display module 234 is viewable through the user optics 210. The user optics 210 include a lens 236 for focusing the intensity enhanced image onto an eye of a user. In the present example, the configuration of the lens 236 within the user optics 210 is adjustable for a particular user's eyesight or preference.

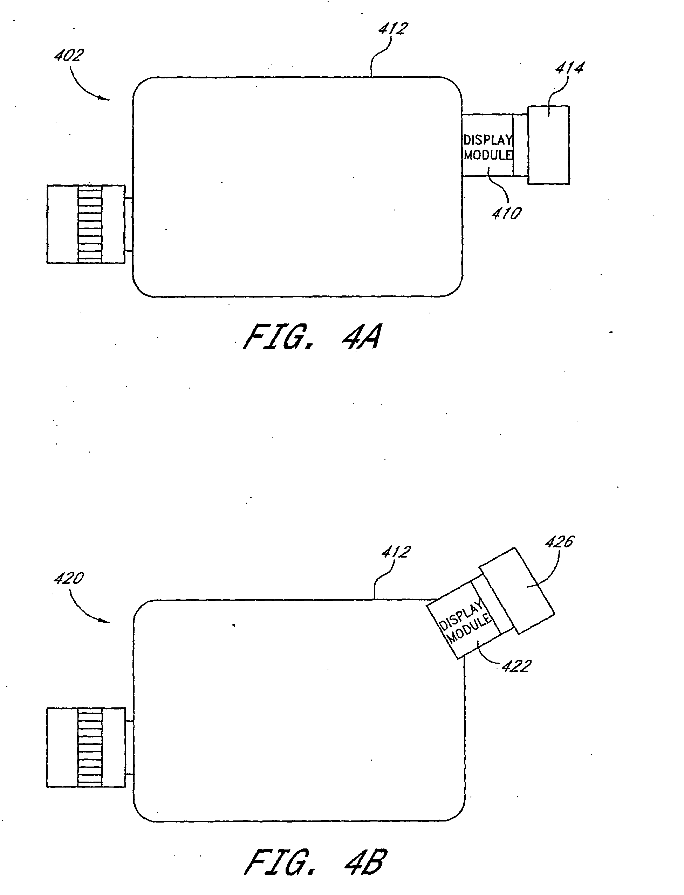

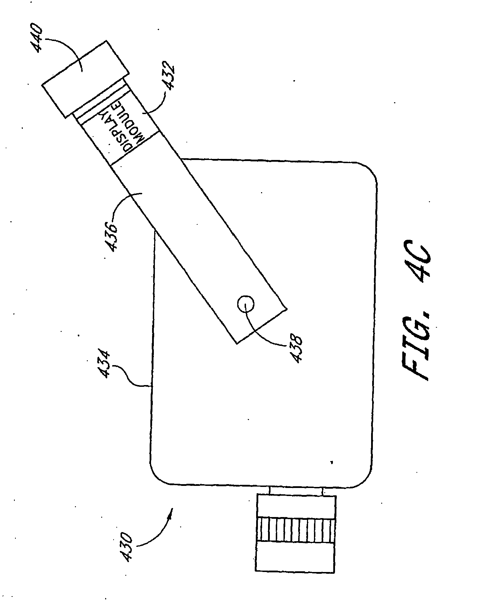

FIG. 4A is a side view of an example of a night vision system 402 having an attached digital display module 410. In the present example, the digital display module 410 is attached to the exterior of a housing 412 of the night vision system 402. The night vision system 402 includes an ocular eyepiece 414 optically coupled to the digital display module 410. The digital display module 410 is configured to display an amplified image of an object through the ocular eyepiece 414 to an eye of a user.

FIG. 4B is a side view of an example of a night vision system 420 having an attached digital display module 422. In the present example, the digital display module 422 partially extends into a housing 424 of the night vision system 420. The night vision system 420 includes an ocular eyepiece 426 optically coupled to the digital display module 422. The digital display module 422 is configured to display an amplified image of an object through the ocular eyepiece 426 to an eye of a user.

FIG. 4C is a side view of an example of a night vision system 430 having an attached digital display module 432. In the present example, the digital display module 432 is attached to the exterior of a housing 434 of the night vision system 430 through an extension member 436. In the present example, the extension member 436 is configured to move relative to a location 438 attached to the housing 434. The night vision system 430 includes an ocular eyepiece 440 optically coupled to the digital display module 432. The digital display module 432 is configured to display an amplified image of an object through the ocular eyepiece 440 to an eye of a user.

An artisan will recognize that other hand-held night vision systems having attached digital display modules that are viewable through an ocular eyepiece are within the scope of the invention. For example, an ocular eyepiece may be attached directly to a housing of a night vision system and be optically coupled to a digital display module without being physically attached to the digital display module.

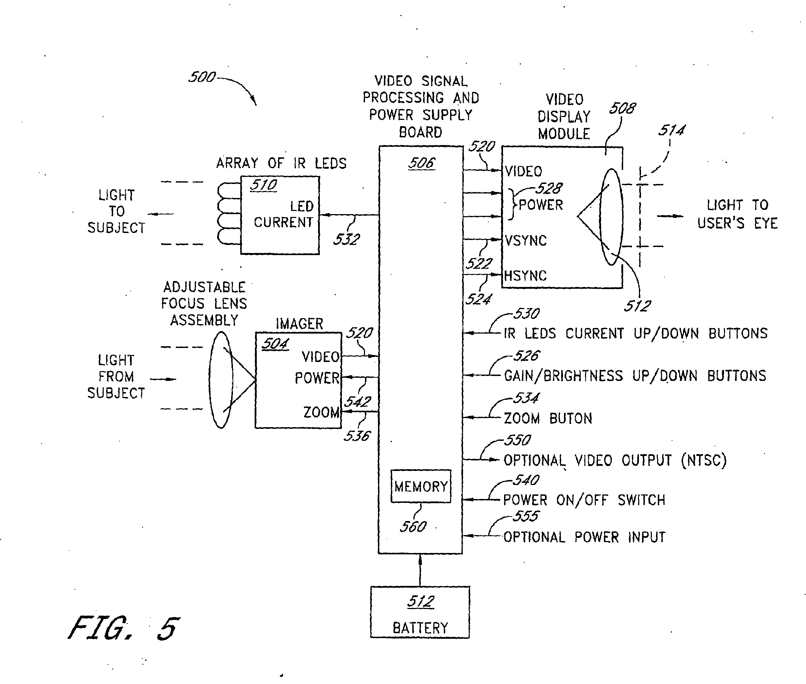

FIG. 5 is a block diagram illustrating an example of a night vision system 500. The night vision system 500 includes an adjustable focus lens assembly 502 configured to project light onto an imager 504. The imager 504 is configured to provide low light imaging of the light from the lens assembly 502. In the present example, the imager 504 can include, for example, an array of photodiodes, one or more charge coupled devices (CCD), one or more complementary metal oxide silicon (CMOS) devices, a combination of the same, or the like. In the present example, the imager 504 is a digital video camera. By way of example and without intention to limit or construe the disclosure or claims, the imager may include a monochromatic CCD camera having a light sensitivity of 0.03 Lux when used with an F1.2 lens 302. In one example, the imager 504 is configured to use standard EIA RS 170 (monochrome NTSC) output data format and timing.

The imager 504 is coupled to a video signal processing and power supply board 506 (the "circuitry"), which is in turn coupled to a video display module 508, an array of infrared LEDs 510, and a battery 512. The circuitry 506 is configured to receive a VIDEO signal 520 from the imager 504 corresponding to an intensity enhanced image and to provide video sync separation to the display module 508. The video sync separation may include, for example, vertical sync (VSYNC) 522 and horizontal sync (HSYNC) 524 information extracted from the VIDEO signal 520.

The VIDEO signal 520 is also provided to the video display module 508. The video display module 508 is configured to display the intensity enhanced image. The video display module 508 includes optics 512 configured to transmit the intensity enhanced image to a user's eye. Thus, the user views the amplified image of the subject displayed by the video display module 508 by looking into the optics 512. In the present example, the optics 512 are adjustable to accommodate the vision of an individual user. In the present example, the video display module 508 comprises a liquid crystal display (LCD) or similar device, such as those associated with, for example, camcorders, laptops, cell phones personal digital assistants (PDAs), other computing devices, or the like.

In the present example, the video display module 508 is monochrome. In the present example, the night vision system 500 can also include a user-selectable filter 514 disposed between the user's eye and the monochrome image produced by the video display module 508. The filter 514 is selectable based on personal preference or different night vision applications. For example, and not by limitation, a red filter can be selected to preserve night vision, a green filter can be selected to increase the details of the displayed image, and a neutral filter can be selected to reduce the amount of light received by the eye of the user.

The circuitry 506 is also configured to control the gain or brightness of the image produced by the video display module 508. Thus, a user can command a GAIN/BRIGHTNESS UP/DOWN BUTTONS signal 526 to adjust POWER signals 528 supplied to the video display module 508. A user can also command an IR LEDS CURRENT UP/DOWN BUTTONS signal 530 to control an LED CURRENT signal 532 supplied to the array of infrared LEDs 510. By adjusting the level of the LED CURRENT signal 532, a user can control the intensity of infrared light emitted by the array of infrared LEDs 510.

A user can also command a ZOOM BUTTON signal 534 for adjusting a ZOOM signal 536 provided to the imager 504. The imager 504 is configured to digitally adjust the zoom of an image of the subject being viewed in response to the ZOOM signal 504. In the present example, the lens assembly 502 is configured to optically adjust the zoom of the image. A user can further command a POWER ON/OFF SWITCH signal 540 to apply or remove the POWER signals 528 to the video display module 520, the LED CURRENT signal 532 to the array of infrared LEDs 510, and the POWER signal 542 to the imager 504.

In the present example, the circuitry 506 is configured to output an OPTIONAL VIDEO OUTPUT signal 550 corresponding to the VIDEO signal 520 generated by the imager 504. The OPTIONAL VIDEO OUTPUT signal 550 may be supplied, for example, to a remotely located external display device (not shown). In one example, the OPTIONAL VIDEO OUTPUT signal 550 is supplied to a wireless device configured to transmit the OPTIONAL VIDEO OUTPUT signal 550 to a remote location. The OPTIONAL VIDEO OUTPUT signal 550 may also be recorded on an external video storage medium (not shown), such as, a VHS cassette, video CD, DVD, hard drive, disk drive, mass media storage device, the Internet, or the like. In an embodiment, the circuitry 506 is configured to receive an OPTIONAL POWER INPUT signal 555 configured to provide power to the night vision system 500.

In the present example, the circuitry 506 includes a memory device 560 comprising, for example, random access memory (RAM), a drive that accepts hard or floppy disks, tape cassettes, CD-ROM or DVD-ROM media, or the like. The memory device 560 can include program instructions for controlling the circuitry 506 and storing data including values corresponding to the GAIN/BRIGHTNESS UP/DOWN BUTTONS signal 526, IR LEDS CURRENT UP/DOWN BUTTONS signal 530 and ZOOM BUTTON signal 534.

In the present example, the circuitry 506 includes a controller comprising, by way of example, one or more processors, program logic, hardware, software, or other substrate configurations capable of representing data and instructions which operate as described herein or similar thereto. The circuitry 506 may also include controller circuitry, processor circuitry, processors, general purpose single-chip or mult-chip microprocessors, digital signal processors, embedded microprocessors, microcontrollers, combinations of the foregoing, or the like.

The array of infrared LEDs 510 is configured to provide subject illumination for good night vision performance. In one example, the array of infrared LEDs 510 is a high-powered infrared light source.

Although the present invention has been described with reference to specific embodiments, other embodiments will occur to those skilled in the art. It is to be understood that the embodiments described above have been presented by way of example, and not limitation, and that the invention is defined by the appended claims.

## Claims

1. A handheld night vision device for viewing a subject in low light conditions, the night vision device comprising:
a housing having optics to collect light into the housing;
an eyepiece;
an imager positioned to be illuminated by the light, the imager configured to generate an electrical signal representative of an intensity enhanced image of the light;
an electronic display attached to the housing and viewable through the eyepiece, the electronic display configured to display the intensity enhanced image.

2. The night vision device of Claim 1, wherein the electronic display is disposed within the housing.

3. The night vision device of Claim 1 or 2, wherein the eyepiece further comprises a flexible eye cup pliable to encompass an eye of a user so as to substantially preclude illumination of a face of the user.

4. The night vision device of Claim 1, 2 or 3 wherein the electronic display comprises a liquid crystal display (LCD).

5. The night vision device of any preceding Claim, further comprising a light source.

6. The night vision device of Claim 5, wherein the light source comprises an infrared light source.

7. The night vision device of Claim 5 or 6, wherein the light source comprises an array of infrared light emitting diodes.

8. The night vision device of Claim 5, 6 or 7 further comprising a user controller configured to adjust the intensity of the light source.

9. The night vision device of any preceding Claim, further comprising an interchangeable filter disposed between the electronic display and the eyepiece.

10. The night vision device of Claim 9, wherein the interchangeable filter is configured to reduce night blindness.

11. The night vision device of Claim 9 or 10, wherein the interchangeable filter is configured to enhance the contrast of the electronic display.

12. The night vision device of Claim 9, 10 or 11 wherein the interchangeable filter is configured to reduce the amount of light projected through the eyepiece.

13. The night vision device of any preceding Claim, wherein the brightness of the electronic display is adjustable.

14. A method for providing night vision to a user, the method comprising:
receiving image data through first optics into a housing;
digitally enhancing the image data to create enhanced image data adjusted for low light conditions;
electronically displaying an image corresponding to the enhanced image data on a screen disposed within the housing; and
providing a view of the screen through second optics attached to the housing.

15. The method of Claim 14, further comprising emitting light so as to illuminate an object to be observed.

16. The method of Claim 15, further comprising emitting infrared light.

17. The method of Claim 16, further comprising selectively adjusting the intensity of the infrared light.

18. The method of any of Claims 14 to 17, further comprising selectively adjusting the gain of the screen.

19. The method of any of Claims 14 to 18, further comprising selectively filtering the view of the screen through the second optics.

20. The method of Claim 19, wherein the selective filtering is based on preserving unaided visual acuity.

21. The method of Claim 19 or 20, where the selective filtering is based on enhancing visual quality.

22. The method of any of Claims 14 to 21, further comprising providing an electronic signal corresponding to the enhanced image data to an external device.

23. The method of any of Claims 14 to 22, further comprising remotely displaying the image.

24. The method of any of claims 14 to 23, wherein receiving the image through the first optics comprises:
collecting light through an objective lens; and
focusing the light onto an optical sensor.
